# EUROPEAN PATENT SPECIFICATION

(11) **EP 2 693 287 B1**
(45) Date of publication and mention of the grant of the patent: **21.02.2018**
(21) Application number: 12005526.4
(22) Date of filing: 30.07.2012
(51) Int. Cl.: G05D 16/06, G05D 23/02, G05D 27/00, B25B 27/24

(54) **Valve arrangement for controlling a heating or cooling fluid and tool arrangement for replacing at least a part of such a valve arrangement**
Ventilanordnung zur Regelung des Durchflusses einer Heiz- oder Kühlflüssigkeit und Werkzeuganordnung zum Auswechseln von mindestens einem Teil einer derartigen Ventilanordnung
Agencement de soupape pour contrôler un fluide de chauffage ou de refroidissement et agencement d'outils pour remplacer au moins une pièce d'un tel agencement de soupape

(43) Date of publication of application: 05.02.2014
(73) Proprietor: Danfoss A/S, 6430 Nordborg (DK)
(72) Inventor: Bjerggaard, Niels, 8370 Hadsten (DK); Christensen, Morten H., 8963 Auning (DK); Hansen, René, 7323 Give (DK); Hølck, Poul, 8300 Odder (DK); Krogh, Tina Vassard, 8960 Randers (DK); Rasmussen, Bent Karsten, 8600 Silkeborg (DK)
(74) Representative: Knoblauch, Andreas

(56) References cited:
- DE-B3- 10 256 035
- JP-A- 2000 081 163
- US-A- 2 937 657
- US-A- 4 748 997
- US-A- 5 533 245
- US-A- 5 860 591
- US-A- 6 062 257
- US-B1- 6 253 436

## Description

The present invention relates to a valve arrangement for controlling a heating or cooling fluid comprising: a valve housing having an inlet and an outlet, and a first valve means and a second valve means, wherein the first valve means is a pressure regulating valve and the second valve means is a flow control valve, and wherein the pressure regulating valve comprises a control valve seat. The invention also relates to a tool arrangement for replacing at least part of said valve arrangement.

Such a valve arrangement is usually used to control the flow of a heating fluid through a radiator or a floor heating system or for controlling a cooling fluid through another heat exchanger which is used for cooling a room in a building. The flow of the heating or cooling fluid is controlled by adjusting a distance between a valve element and a valve seat. This distance can be adjusted by moving the valve element relative to the valve seat.

In some cases the operation of such a valve arrangement causes a noise which reduces the comfort of a person in the room which is to be heated or cooled. In such cases it is very difficult to reduce such a noise to a level which is acceptable by the person.

US 6 062 257 A shows a flow control valve with integrated pressure controller. A flow control valve is formed by a control valve element which interacts with a control valve seat, the latter of which is part of a valve insert. A pressure regulating valve is formed by a regulating valve member which cooperates with a second valve seat. Both the flow control valve as well as the pressure regulating valve are inserted into the valve housing through a common opening.

US 4 748 997 shows an apparatus for replacing a water supply valve of a hydrant. The apparatus comprises a housing and a connection part. A valve seat tool comprises a valve seat wrench that is guided inside the housing. JP 2000 081163 A deals with a flow control valve comprising a control valve element and a control valve seat. The influence of the shape of the control valve seat on the noise generation of the valve is discussed in detail.

US 2 937 657 A shows a flow control valve in a fire valve as well as a tool arrangement for replacing the flow control valve. The tool arrangement comprises a connection part allowing to mount the tool arrangement onto the valve housing of the fire valve. The tool arrangement furthermore comprises a stop valve part as well as a valve seat tool.

US 6 253 436 B1 discloses a further tool arrangement for replacing parts of a valve. The tool arrangement comprises a connection part, a stop valve part as well as a tool head for removing a valve core.

The task underlying the invention is to enhance the comfort of a user in a room to be heated or cooled.

This task is solved with a valve arrangement of the above mentioned type by having the pressure regulating valve comprise valve fixing means to detachably secure said pressure regulating valve to the valve housing and by the pressure regulating valve and the flow control valve being inserted into the valve housing via a common opening, and wherein said pressure regulating valve is connected to a tool fixing geometry allowing a valve seat tool to be fastened.

If the valve arrangement causes a problem, for example generates a noise during operation, it is possible to replace the valve seat. In many cases such a replacement of the valve seat changes the noise generation and, if a suitable valve is used as replacement valve seat, the generation of noise can be avoided or dramatically reduced. Furthermore, the replacement of the valve seat is advantageous in a case in which the valve does not work properly. In some cases a calcination of the valve seat occurs or other dirt or debris accumulates at the valve seat. The cleaning of the valve seat has the risk of damaging the valve seat. When a first valve means is detachably secured to the valve housing by valve fixing means, it is rather simple to replace the old valve seat with a new one. The first valve means may be either the flow control valve or the pressure regulating valve.

The valve fixing means allow to secure the first valve means to the valve housing without the need of other valve parts holding the first valve means in place. This is especially important during the replacement of a valve seat under pressure.

Inserting the pressure regulation valve and the flow control valve via a common opening removes the need of an additional opening in the valve housing. A common opening reduces the need of additional seals and reduces the risk of leakage.

Furthermore, the first valve means are connected to a tool fixing geometry allowing a valve seat tool to be fastened. The tool fixing geometry can be arranged directly at the first valve means or it can be positioned at a part which can be moved out of the valve housing together with the first valve means. The tool fixing geometry allows the valve seat tool, which is a demounting or mounting tool; to be fastened. In order to remove the valve seat from the housing it may be necessary to connect the valve seat tool to the tool fixing geometry to remove the first valve means. Then the valve fixing means can be loosened and the first valve means can be pulled out of the housing.

Preferably the valve fixing means are one of the following: screw connection, bayonet quick-lock, clip-lock. Choosing the valve fixing means from one of the mentioned types allows to secure and remove the valve seat to the valve housing easily.

In another preferred embodiment the pressure regulating valve comprises a regulating valve element and said regulating valve element is detachably connected to the valve seat. Making the valve seat detachable from the regulating valve element means that the regulating valve element can be easily removed from one valve seat and connected to a new valve seat if necessary.

In a preferred embodiment the first valve means are detachably secured to the valve housing upstream the valve seat and the tool fixing geometry is part of the first valve means. In this case the valve seat tool is fastened to the first valve means. When the first valve means are moved out of the housing the valve seat is removed as well.

Preferably a plurality of different valve seats is provided and a valve seat mounted in said housing is replaceable by another valve seat of said plurality of valve seats. The installer or a maintenance person is provided with a stock or supply of valve seats so that he is able to replace one valve seat with another one.

Preferably at least two valve seats of said plurality of valve seats differ in a curvature of an edge surrounding a through-opening through said valve seat. This through-opening forms a part of the flow path through the valve arrangement. The curvature of the edge is one reason for the generation of noise. However, it is difficult to predict which curvature would generate noise in a certain system. However, when different curvatures are available, the installer can easily chose another curvature of the edge and the installed one in order to avoid the generation of noise or other adverse effects.

In a preferred embodiment at least two valve seats of said plurality of valve seats differ in material. Another possibility for changing the characteristics of the valve arrangement is to use a valve seat having a different material.

Preferably the first valve means comprise a valve holding geometry that is different from the tool fixing geometry. If the first valve means include a valve holding geometry that is different from the tool fixing geometry the first valve means can be held still while a valve seat tool is being connected to or disconnected from the tool fixing geometry. Otherwise there may for example be the risk of loosening the first valve means from the valve housing when disconnecting the valve seat tool from the tool fixing geometry. The valve housing geometry may for example be a torx profile arranged in the first valve means. The torx profile could be in a direct vicinity of the tool fixing geometry and/or both could be arranged in a common opening of the first valve means.

In another preferred embodiment the second valve means are supported in an upper part of the valve housing and said upper part comprises a tool engaging geometry and the tool fixing geometry and said tool engaging geometry have a common axis. The embodiment has the advantage that a common tool arrangement can be used for demounting the upper part of the valve as well as the valve seat. Since in the present case the upper part of the valve has to be removed before the valve seat can be removed this arrangement facilitates the demounting of the valve seat. For example: for the demounting of the upper part and the demounting of the valve seat a rotation of a demounting tool around the same axis is sufficient for the demounting.

In yet another preferred embodiment the first valve means are supported in the upper part of the valve housing and said valve fixing means detachably secure said first valve means to be upper part. In this embodiment both valve means are supported in the upper part and can thus both be removed from the valve housing together with the upper part. The first valve means are detachably secured to the upper part so they can be removed from the valve housing safely together with the upper part. Once removed from the valve housing the first valve means may be loosened from the upper part to replace the valve seat.

For solving the above mentioned task a tool arrangement is provided for replacing at least a part of the valve arrangement described above, said tool arrangement having a tool housing, said tool housing having a connection part for mounting said tool housing to said valve housing, a tool guiding part and a stop valve part arranged between said connection part and said tool guiding part, said tool guiding part guiding an actuating means, said actuating means carrying a valve seat tool and valve holding means, wherein said valve seat tool is adapted to said tool fixing geometry, and said valve holding means are adapted to hold said pressure regulating valve comprising said control valve seat in position while the valve seat tool is being connected to or disconnected from the tool fixing geometry.

Such a tool arrangement can be used for a simple removal of the valve seat. The connection part is connected to the valve housing, the stop valve part being closed so that no heating or cooling fluid can escape when the upper part of the valve is removed. When the upper part is removed, the valve seat tool can be fixed to the tool fixing geometry. The valve holding means can be used to hold the first valve means in position, while the valve seat tool is being connected to the tool fixing geometry. Otherwise there may be the risk of loosening the first valve means from the valve housing before the valve seat tool is firmly connected to the tool fixing geometry. The valve seat can be moved out of the valve housing by pulling the actuating means. When the valve seat has been pulled out of the housing and out of the stop valve part of the tool housing, the stop valve part is closed so that the valve seat can be removed from the tool arrangement. To this end the tool housing has to be opened. When the tool housing is opened, the valve seat on the valve seat tool can be replaced by another valve seat and inserted back again in the tool housing. When the tool housing is closed in a fluid tight manner, the stop valve part of the tool housing is opened and the valve seat can be inserted into the valve housing by means of the actuating means which is pushed toward the valve housing.

Again the valve holding means allow to hold the installed first valve means in position while the valve seat tool is being disconnected from the tool fixing geometry. Otherwise the first valve means may be left in a loosen state in the valve housing, which may damage the valve arrangement and/or require the repeating of the valve seat placement procedure.

Preferably an upper part tool is mounted to said actuating means, said upper part tool is adapted to said tool engaging geometry. The upper part tool can be used to remove the upper part of the valve from the valve housing. To this end the upper part tool is connected to the tool engaging geometry. For example, the upper part can be screwed out of the housing by rotating the actuating means and pulling it away from the valve housing when the upper part has been disconnected from the valve housing. The upper part tool can be mounted detachably to said actuating means. In this case it is possible to replace the upper part tool with the valve seat tool. The upper part tool is a demounting and mounting tool as well.

However, in a preferred embodiment said valve seat tool is mounted to said upper part tool. In this case the upper part tool can remain at the actuating means and the valve seat tool is mounted additionally to the actuating means, when it is necessary. This has the advantage of saving work during replacement. It is not necessary to remove the upper part tool from the actuating means.

Preferably said upper part tool forms a hollow cylinder and the valve seat tool is insertable into said hollow cylinder. In many cases the tool engaging geometry is not arranged at an end of the upper part facing away from the valve housing but the upper part protrudes over the tool engaging geometry in a direction away from the valve housing. The hollow cylinder has the advantage that the protruding part of the upper part can be inserted in the hollow cylinder. Furthermore, the hollow cylinder can easily be used to couple the valve seat tool to the upper part tool.

A preferred embodiment of the invention will now be described in more detail with reference to the drawings, wherein:
- Fig. 1: shows a section through a valve arrangement,
- Fig. 2: shows a detail A of Fig. 1,
- Fig. 3: shows a section through a tool arrangement,
- Fig. 4: shows a detail B of Fig. 3 and
- Fig. 5: shows the tool arrangement from the outside.

A valve arrangement 1 comprises a valve housing 2 having an inlet 3 and an outlet 4. A flow control valve 5 is arranged between the inlet 3 and the outlet 4. The flow control valve 5 has a control valve element 6 and a control valve seat 7. The control valve seat 7 is arranged at a seat element 8.

The control valve element 6 is positioned at a lower end (as shown in the drawing) of a valve spindle 9. The valve spindle 9 is loaded by a spring 10 in an opening direction.

The flow control valve 5 comprises an upper part 11 which can also be referred to as control valve housing. The upper part 11 is threaded into the valve housing 2 of the valve arrangement 1. A pre-adjustment means 12 is arranged within the control valve housing 11 and comprises a wall 13 extending in circumferential direction and surrounding the control valve element 6. The wall 13 has an axial length varying in circumferential direction so that the wall 13 forms a rotary gate. Depending on the angular position of the pre-adjustment means 12 a passage between the flow control valve 5 and the outlet 4 is more or less opened.

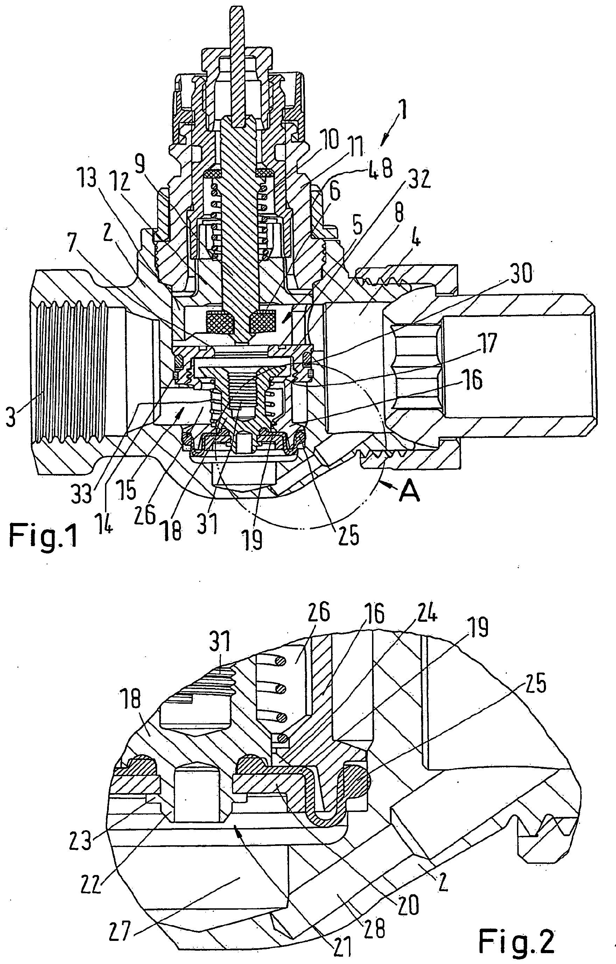

The valve arrangement 1 further comprises a pressure regulating valve 15. In Fig. 1 and 2 the first means are shown as the pressure regulating valve 15 and the second valve means are disclosed as the flow control valve 5. Alternative embodiments of the invention will be discussed later on. This pressure regulating valve 15 comprises valve fixing means 14, and a regulating valve housing 16 forming a regulating valve seat 17 and a regulating valve element 18 which is shown in an open condition, i.e. an opening between the regulating valve element 18 and the regulating valve seat 17 is at a maximum. The seat element 8 forming the control valve seat 7 is part of the regulating valve housing 16. However, the seat element 8 can be a separate part from the regulating valve housing.

The pressure regulating valve 15 comprises valve fixing means 14 to detachably secure the pressure regulating valve 15 to the valve housing 2. Experience has shown that the pressure regulating valve 15 may otherwise get loosened from the valve housing 2 unintentionally during the valve seat replacement.

As can be seen in Fig. 2 the regulating valve element 18 is connected to a membrane 19. The membrane 19 is fixed to the regulating valve element 18 with help of a membrane fixing means 20. The membrane fixing means 20 is connected to the regulating valve element 18 with a rivet like connection 21. To this end the regulating valve element 18 has a stud 22 protruding through the membrane fixing means 20 and having a crimped collar 23 holding the fixing means 20 against the regulating valve element 18.

The regulating valve element 18 passes through a bore 24 in the regulating valve housing 16. The diameter of the membrane fixing means 20 is larger than the diameter of the bore 24. Therefore, the regulating valve element 18 can be moved into an opening direction of the pressure regulating valve 15 only to a position in which the membrane 19 is clamped between the membrane fixing means 20 and the regulating valve housing 16. No further movement relative to the regulating valve housing 16 is possible.

The membrane 19 comprises a sealing ring 25 formed integrally with the rest of the membrane 19. This sealing ring 25 forms a seal between the regulating valve housing 16 and the valve housing 2 and separates a first chamber 26 which is connected to the inlet 3 from a second chamber 27 which is connected to the outlet 4 via a chamber 26.

The pressure regulating valve 15 and the flow control valve 5 are inserted into the housing 2 via a common opening. In other words the pressure regulating valve 15 and the flow control valve 5 are mounted from the same direction. This has the advantage that only one opening must be sealed to the outside. However, it has the drawback that the pressure regulating valve 5 is difficult to remove once it has been mounted in the valve housing 2. The sealing ring 25 of the membrane 19 and a further sealing ring 30 between the regulating valve housing 16 and the valve housing 2 additionally hold the pressure regulating valve 15 in the valve housing 2 with a rather high friction.

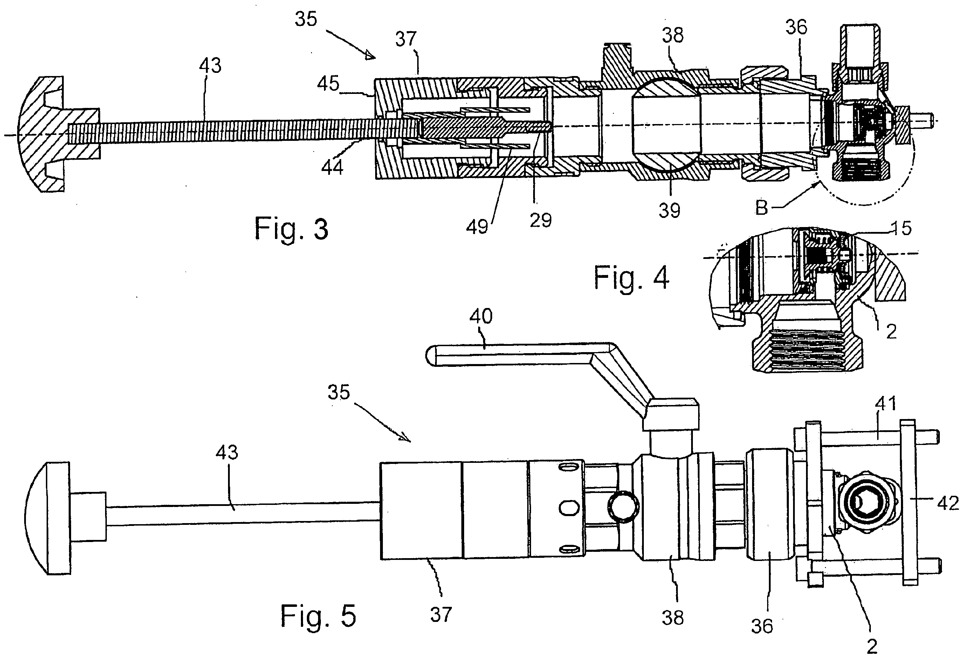

In order to be able to demount the pressure regulating valve 15 from the valve housing the regulating valve element 18 is provided with a tool fixing geometry 31. The tool fixing geometry 31 allows a valve seat tool 29 (Fig. 3) to be fastened to the pressure regulating valve 15. The pressure regulating valve 15 can also comprise a valve holding geometry 32. A valve holding geometry 32 allows to hold the pressure regulating valve 15 in position while the tool arrangement 35 is being connected to or disconnected from the tool fixing geometry 31. Otherwise there may for example be the risk of loosening the pressure regulating valve 15 from the valve housing 2 while disconnecting the tool arrangement 35 from the tool fixing geometry 31. Once the valve seat tool 29 is in engagement with the tool fixing geometry 31 the valve fixing means 14 can be loosened. Then the pressure regulating valve 15 together with the control valve seat 7 can easily be moved out of the valve housing 2 when the valve seat tool 29 is pulled out of the valve housing 2. In this case the tool fixing geometry 31 is indirectly connected to the control valve seat 7.

In the present embodiment the tool fixing geometry 31 has the form of a thread. The valve seat tool 29 can easily be threaded into the regulating valve element 18. Another possibility is to form the tool fixing geometry as part of a bayonet joint. In this case the valve seat tool is inserted into the regulating valve element 18 and turned by a predetermined angle like a bayonet. Thereafter, it is possible to pull out the pressure regulating valve 15 together with the control valve seat 7 once the valve fixing means 14 are disconnected from the valve housing 2.

Although the valve seat tool 29 engages the regulating valve element 18 only the whole pressure regulating valve 15 together with a control valve seat 7 can be removed from the valve housing 2 since the membrane fixing means 20 transmits the drawing force to the regulating valve housing 16. Since the seat element 8 is part of the regulating valve housing 16 the control valve seat 7 is removed together with the regulating valve housing 16 out of the valve housing 2.

The seat element 8 is secured to the regulating valve housing 16. In the present example this connection is made as treaded connection, i.e. the seat element 8 is threaded onto the regulating valve housing 16. It is also possible to use a crimp connection between the seat element 8 and the regulating valve housing 16.

Other functions of the valve arrangement 1 are known per se. The pressure regulating valve 15 adjusts an opening between the regulating valve element 18 and the regulating valve seat 17 so that a pressure drop over the flow control valve is kept constant. To this end the regulating valve element 18 is loaded by a spring 33 in an opening direction. The pressure at the inlet 3 acts on the regulating valve 18 in opening direction and the pressure in the outlet 4 acts on the regulating valve element 18 in closing direction.

Figs. 3 to 5 show a tool arrangement 35 for removing the control valve seat 7 from the valve housing 2 and for inserting another control valve seat 7. As described above this operation is performed by exchanging the pressure regulating valve 15.

The tool arrangement 35 comprises a tool housing, said tool housing having a connection part 36, a tool guiding part 37 and a stop valve part 38. The stop valve part 38 is arranged between the connection part 36 and the tool guiding part 37. The stop valve part 38 comprises a ball 39 which can be rotated by means of a lever 40. In the position shown in Fig. 3 the stop valve part 38 is fully open. By rotating the ball 39 by 90° the stop valve part 38 can be completely closed.

The connection part 36 is screwed on the valve housing 2. Additional fixation means 41, 42 are used to make the connection between the tool arrangement 35 and the valve housing 2 more stable. The connection between the connection part 36 and the valve housing 2 is fluid tight. When the ball 39 of the stop valve part 38 is moved into an open position (as illustrated in Fig. 3), there is a fluid connection from the valve housing 2 to the complete interior of the tool arrangement 35.

A spindle 43 is guided in the tool guiding part 37. The spindle 43 is inserted in an opening 44 in a front face 45 of the tool arrangement 35. The opening 44 is sealed. The spindle 43 can be rotated around an axis (dashed line) and moved in axial direction. The spindle 43 forms an actuating means.

The part of the spindle 43 inside the tool guiding part 37 can also carry an upper part tool. This upper part tool is screwed to the spindle 43 or connected to the spindle 43 in another suitable manner.

The upper part tool is formed as a hollow cylinder having a portion of a greater diameter. This portion can be connected to the upper part 11 of the flow control valve 5 in a torque transmitting manner. A corresponding tool engaging geometry 48, e.g. a spline geometry, is schematically indicated in Fig. 1. The upper part tool is not explicitly show in Fig. 3 but it may be combined with the valve seat tool 29 and or the valve holding means 49.

The tool arrangement 45 also comprises valve holding means 49 that allow to hold the pressure regulating valve in position while the valve seat tool 29 is being connected to or disconnected from the tool fixing geometry 31. The valve holding means 49 may also be combined with the upper part tool. The tool arrangement 35 may also comprise means to control the valve holding means 49 independently from the valve seat tool 29 and the upper part tool. It is advantageous if the valve holding means 49 are adapted to said valve holding geometry 32. By adapting the valve holding means 49 to the valve holding geometry 32 the pressure regulating valve 15 can be more easily held in place when the valve seat tool 29 is being connected to or disconnected from the tool fixing geometry 31.

The upper part tool may have connection geometries, one in a portion of greater diameter and one in a remaining portion. The valve seat tool 29 may be screwed into the remaining portion having a smaller diameter than the portion of greater diameter.

In Fig. 3 a situation is illustrated in which the upper part 11 has already been removed from the valve housing 2. The valve seat tool 29 is screwed to the spindle 43. The stop valve portion 38 is opened. In this condition the spindle 43 is pushed toward the valve housing 2. The valve holding means 49 engage the valve holding geometry 32. Then the valve seat tool 29 is screwed into the tool fixing geometry 31. Afterwards, the valve fixing means 14 of the pressure regulating valve 15 can be loosened and the complete pressure regulating valve 15 including the control valve seat 7 is removed from the valve housing 2.

When the pressure regulating valve 15 has passed the stop valve section 38 the ball 39 is rotated by 90° in order to close the stop valve part 38. Thereafter, the tool guiding portion 37 can be removed from the tool arrangement 35 and the pressure regulating valve 15 together with the control valve seat 7 can be removed from the valve seat tool 29. Then, a new pressure regulating valve 15 having a new control valve seat 7 can be screwed onto the valve seat tool 29. The tool guiding part 37 is again connected to the remaining parts of the tool arrangement 35. When a fluid tight connection between the tool guide part 37 and the stop valve part 38 has been established the ball 39 is again rotated by 90° in order to open the stop valve part 38. When the ball 39 is in the open position (Fig. 3) the new pressure regulating valve 15 can be secured to the valve housing 2 using the valve fixing means 14.

Thereafter, the valve seat tool 29 is decoupled from the pressure regulating valve 15. During this decoupling step it is particularly important that the valve holding means 49 hold the pressure regulating valve 15 firmly in place to ensure that the pressure regulating valve 15 is not loosened from the valve housing 2 while the valve seat tool 29 is decoupled from the tool fixing geometry 31. Then the spindle 43 is pulled in a direction away from the valve housing 2. When the valve seat tool 29 has passed the stop valve part 38 the ball 39 is rotated by 90° in order to close the stop valve part 38. The tool guiding part 37 is again demounted. The valve seat tool 29 is screwed out of the upper part tool and the upper part 11 is inserted into the upper part tool. The tool guiding part 37 is again fastened to the remainder of the tool arrangement 35 in a fluid tight manner. The stop valve part 38 is opened. The spindle 43 is pushed towards the valve housing and is used to screw the upper part 11 into the valve housing 2.

When the valve arrangement 1 has been reconstructed in the manner described, the tool arrangement 35 can be removed from the valve housing 2. The loss of heating or cooling fluid is reduced to a minimum.

When the control valve seat 7 has to be replaced again, the tool arrangement 35 is used first to remove the upper part 11 of the valve arrangement 1 and then the pressure regulating valve 15.

When the control valve seat 7 is not part of the regulating valve housing 16 the valve seat tool 29 has to be modified. The modified form of the valve seat tool depends on the form of the seat element 8.

As shown in Fig. 1 the valve seat 7 has an edge facing the valve element 6. This edge comprises a curvature. A plurality of valve seats 7 is provided, wherein at least two of these valve seats 7 have different curvatures. The change of the curvature is in many cases sufficient to reduce a noise produced during the operation of the valve arrangement 1.

An additional possibility is that the material of the valve seat element 8 is different from other valve seats of the plurality of valve seats. This is a further possibility to change the vibrational behavior of elements of the valve arrangement 1 which are usually cause of noise. The Fig. 1 and 2 show one possible valve arrangement according to the invention. Namely the first valve means are in the disclosed embodiment shown as the pressure regulating valve 15 and the second valve means are shown as the flow control valve 5.

On the other hand the first valve means may also be the flow control valve 5 in which case the second valve means would be the pressure regulating valve 15. Such an embodiment could simplify the replacement of a valve seat 7, because the pressure regulating valve 15 and the valve seat 7 would be supported in the upper part 11. The pressure regulating valve 15 and the valve seat 7 could then be removed from the valve housing 2 simply by removing the upper part 11. Consequently it would not be necessary to also remove the flow control valve 5 from the valve housing 2.

In another alternative embodiment both valve means and the valve seat 7 could be supported in the upper part 11. This way both valve means and the valve seat 7 could be removed from the valve housing 2 by removing the upper part 11. Again this may simplify the replacement of a valve seat 7.

## Claims

1. A valve arrangement for controlling a heating or cooling fluid comprising: a valve housing (2) having an inlet (3) and an outlet (4), and a first valve means and a second valve means, wherein the first valve means is a pressure regulating valve (15) and the second valve means is a flow control valve (5), and wherein the pressure regulating valve (15) comprises a control valve seat (7), **characterized in that** the pressure regulating valve (15) comprises valve fixing means (14) to detachably secure said pressure regulating valve (15) to the valve housing (2), and wherein the pressure regulating valve (15) and the flow control valve (5) are inserted into the valve housing (2) via a common opening, and wherein said pressure regulating valve (15) is connected to a tool fixing geometry (31) allowing a valve seat tool (29) to be fastened.

2. The valve arrangement according to claim 1, **characterized in that** the valve fixing means (14) are one of the following: screw connection, bayonet quick-lock, clip-lock.

3. The valve arrangement according to claim 1 or 2, **characterized in that** the pressure regulating valve (15) comprises a regulating valve element (18) and said regulating valve element (18) is detachably connected to the control valve seat (7).

4. The valve arrangement according to any of claims 1 to 3, **characterized in that** the pressure regulating valve (15) is detachably secured to the valve housing (2) upstream the control valve seat (7) and the tool fixing geometry (31) is part of the pressure regulating valve (15).

5. The valve arrangement according to any of claims 1 to 4, **characterized in that** a plurality of different valve seats is provided and a control valve seat (7) fixed in said valve housing (2) is replaceable by another control valve seat (7) of said plurality of valve seats.

6. The valve arrangement according to claim 5, **characterized in that** at least two control valve seats (7) of said plurality of valve seats differ in a curvature of an edge surrounding a through-opening through said valve seat.

7. The valve arrangement according to claim 5 or 6, **characterized in that** at least two valve seats of said plurality of valve seats differ in material.

8. The valve arrangement according to any of claims 1 to 7, **characterized in that** the pressure regulating valve (15) comprises a valve holding geometry (32), wherein said valve holding geometry (32) is different from the tool fixing geometry (31).

9. The valve arrangement according to any of claims 1 to 8, **characterized in that** the flow control valve (5) is supported in an upper part (11) of the valve housing (2) and said upper part (11) comprises a tool engaging geometry (48), and wherein the tool fixing geometry (31) and the tool engaging geometry (48) have a common axis.

10. The valve arrangement according to claim 9, **characterized in that** the pressure regulating valve (15) is supported in the upper part (11) of the valve housing (2) and wherein said valve fixing means (14) detachably secure said pressure regulating valve (15) to the upper part (11).

11. A tool arrangement (35) for replacing at least a part of a valve arrangement according to any of claims 1 to 10, said tool arrangement (35) having a tool housing, said tool housing having a connection part (36) for mounting said tool housing to said valve housing (2), a tool guiding part (37) and a stop valve part (38) arranged between said connection part (36) and said tool guiding part (37), said tool guiding part (37) guiding an actuating means (43), said actuating means (43) carrying a valve seat tool (29) and valve holding means (49), wherein said valve seat tool (29) is adapted to said tool fixing geometry (31), and said valve holding means (49) are adapted to hold said pressure regulating valve (15) comprising said control valve seat (7) in position while the valve seat tool (29) is being connected to or disconnected from the tool fixing geometry (31).

12. The tool arrangement according to claim 11, **characterized in that** an upper part tool is mounted to said actuating means (43), said upper part tool is adapted to said tool engaging geometry (48).

13. The tool arrangement according to claim 12, **characterized in that** said valve seat tool (29) is mounted to said upper part tool.

14. The tool arrangement according to claim 12 or 13, **characterized in that** said upper part tool forms a hollow cylinder and the valve seat tool (29) is insertable into said hollow cylinder.

## Patentansprüche

1. Ventilanordnung zur Steuerung einer Heiz- oder Kühlflüssigkeit, aufweisend: ein Ventilgehäuse (2) mit einem Einlass (3) und einem Auslass (4) und einem ersten Ventilmittel und einem zweiten Ventilmittel, wobei das erste Ventilmittel ein druckregulierendes Ventil (15) ist und das zweite Ventilmittel ein Strömungssteuerungsventil (5) ist, und wobei das druckregulierende Ventil (15) einen Steuerungsventilsitz (7) aufweist, **dadurch gekennzeichnet, dass** das druckregulierende Ventil (15) Ventilfixierungsmittel (14) aufweist, um das druckregulierende Ventil (15) abnehmbar am Ventilgehäuse (2) zu sichern, und wobei das druckregulierende Ventil (15) und das Strömungssteuerungsventil (5) über eine gemeinsame Öffnung in das Ventilgehäuse (2) eingefügt sind, und wobei das druckregulierende Ventil (15) mit einer Werkzeugfixierungsgeometrie (31) verbunden ist, die eine Befestigung eines Ventilsitzwerkzeugs (29) gestattet.

2. Ventilanordnung nach Anspruch 1, **dadurch gekennzeichnet, dass** die Ventilfixierungsmittel (14) eines der folgenden sind: Schraubverbindung, Bajonettschnellverschluss, Bügelverschluss.

3. Ventilanordnung nach Anspruch 1 oder 2, **dadurch gekennzeichnet, dass** das druckregulierende Ventil (15) ein regulierendes Ventilelement (18) aufweist und das regulierende Ventilelement (18) abnehmbar mit dem Steuerungsventilsitz (7) verbunden ist.

4. Ventilanordnung nach einem der Ansprüche 1 bis 3, **dadurch gekennzeichnet, dass** das druckregulierende Ventil (15) abnehmbar am Ventilgehäuse (2) stromaufwärts des Steuerungsventilsitzes (7) gesichert ist und die Werkzeugfixierungsgeometrie (31) Teil des druckregulierenden Ventils (15) ist.

5. Ventilanordnung nach einem der Ansprüche 1 bis 4, **dadurch gekennzeichnet, dass** eine Vielzahl verschiedener Ventilsitze bereitgestellt ist und ein Steuerungsventilsitz (7), der im Ventilgehäuse (2) fixiert ist, durch einen anderen Steuerungsventilsitz (7) der Vielzahl von Ventilsitzen austauschbar ist.

6. Ventilanordnung nach Anspruch 5, **dadurch gekennzeichnet, dass** sich mindestens zwei Ventilsitze (7) der Vielzahl von Ventilsitzen in einer Krümmung einer Kante, die eine Durchlassöffnung durch den Ventilsitz umgibt, unterscheiden.

7. Ventilanordnung nach Anspruch 5 oder 6, **dadurch gekennzeichnet, dass** sich mindestens zwei Ventilsitze der Vielzahl von Ventilsitzen im Material unterscheiden.

8. Ventilanordnung nach einem der Ansprüche 1 bis 7, **dadurch gekennzeichnet, dass** das druckregulierende Ventil (15) eine Ventilhaltegeometrie (32) aufweist, wobei sich die Ventilhaltegeometrie (32) von der Werkzeugfixierungsgeometrie (31) unterscheidet.

9. Ventilanordnung nach einem der Ansprüche 1 bis 8, **dadurch gekennzeichnet, dass** das Strömungssteuerungsventil (5) in einem oberen Teil (11) des Ventilgehäuses (2) gehalten wird und der obere Teil (11) eine Werkzeugeingriffsgeometrie (48) aufweist, und wobei die Werkzeugfixierungsgeometrie (31) und die Werkzeugeingriffsgeometrie (48) eine gemeinsame Achse haben.

10. Ventilanordnung nach Anspruch 9, **dadurch gekennzeichnet, dass** das druckregulierende Ventil (15) im oberen Teil (11) des Ventilgehäuses (2) gehalten wird und wobei die Ventilfixierungsmittel (14) das druckregulierende Ventil (15) abnehmbar am oberen Teil (11) sichern.

11. Werkzeuganordnung (35) zum Ersetzen mindestens eines Teils einer Ventilanordnung nach einem der Ansprüche 1 bis 10, wobei die Werkzeuganordnung (35) ein Werkzeuggehäuse hat, wobei das Werkzeuggehäuse einen Verbindungsteil (36) zum Montieren des Werkzeuggehäuses am Ventilgehäuse (2), einen Werkzeugführungsteil (37) und einen Stoppventilteil (38), der zwischen dem Verbindungsteil (36) und dem Merkzeugführungsteil (37) angeordnet ist, hat, wobei der Werkzeugführungsteil (37) ein Stellmittel (43) führt, wobei das Stellmittel (43) ein Ventilsitzwerkzeug (29) und Ventilhaltemittel (49) trägt, wobei das Ventilsitzwerkzeug (29) an die Werkzeugfixierungsgeometrie (31) angepasst ist und die Ventilhaltemittel (49) angepasst sind, das druckregulierende Ventil (15), das den Steuerungsventilsitz (7) aufweist, in Position zu halten, während das Ventilsitzwerkzeug (29) mit der Werkzeugfixierungsgeometrie (31) verbunden oder davon getrennt wird.

12. Werkzeuganordnung nach Anspruch 11, **dadurch gekennzeichnet, dass** ein Oberteil-Werkzeug am Stellmittel (43) montiert ist, wobei das Oberteil-Werkzeug an die Werkzeugeingriffsgeometrie (48) angepasst ist.

13. Werkzeuganordnung nach Anspruch 12, **dadurch gekennzeichnet, dass** das Ventilsitzwerkzeug (29) am Oberteil-Werkzeug montiert ist.

14. Werkzeuganordnung nach Anspruch 12 oder 13, **dadurch gekennzeichnet, dass** das Oberteil-Werkzeug einen hohlen Zylinder bildet und das Ventilsitzwerkzeug (29) in den hohlen Zylinder eingeführt werden kann.

## Revendications

1. Système de valve pour la régulation d'un fluide de chauffage ou de refroidissement comprenant : un logement de valve (2) comportant une entrée (3) et une sortie (4), et un premier moyen formant valve et un second moyen formant valve, le premier moyen formant valve étant une valve d'ajustement de pression (15) et le second moyen formant valve étant une valve de régulation d'écoulement (5), et la valve d'ajustement de pression (15) comprenant un siège de valve de régulation (7), **caractérisé en ce que** la valve d'ajustement de pression (15) comprend un moyen de fixation de valve (14) servant à assujettir de manière amovible ladite valve d'ajustement de pression (15) au logement de valve (2), et la valve d'ajustement de pression (15) et la valve de régulation d'écoulement (5) étant insérées dans le logement de valve (2) par une ouverture commune, et ladite valve d'ajustement de pression (15) étant reliée à une géométrie de fixation d'outil (31) permettant la fixation d'un outil de siège de valve (29).

2. Système de valve selon la revendication 1, **caractérisé en ce que** le moyen de fixation de valve (14) est l'un des suivants : raccordement par vissage, verrouillage rapide à baïonnette, verrouillage par accouplement élastique.

3. Système de valve selon la revendication 1 ou 2, **caractérisé en ce que** la valve d'ajustement de pression (15) comprend un obturateur de valve d'ajustement (18) et ledit obturateur de valve d'ajustement (18) est relié de manière amovible au siège de valve de régulation (7).

4. Système de valve selon l'une quelconque des revendications 1 à 3, **caractérisé en ce que** la valve d'ajustement de pression (15) est assujettie de manière amovible au logement de valve (2) en amont du siège de valve de régulation (7) et la géométrie de fixation d'outil (31) fait partie de la valve d'ajustement de pression (15).

5. Système de valve selon l'une quelconque des revendications 1 à 4, **caractérisé en ce qu'**une pluralité de sièges de valve différents est prévue et un siège de valve de régulation (7) fixé dans ledit logement de valve (2) peut être remplacé par un autre siège de valve de régulation (7) de ladite pluralité de sièges de valve.

6. Système de valve selon la revendication 5, **caractérisé en ce qu'**au moins deux sièges de valve de régulation (7) de ladite pluralité de sièges de valve diffèrent du point de vue d'une courbure d'un bord entourant une ouverture traversante s'étendant à travers ledit siège de valve.

7. Système de valve selon la revendication 5 ou 6, **caractérisé en ce qu'**au moins deux sièges de valve de ladite pluralité de sièges de valve diffèrent du point de vue du matériau.

8. Système de valve selon l'une quelconque des revendications 1 à 7, **caractérisé en ce que** la valve d'ajustement de pression (15) comprend une géométrie de maintien de valve (32), ladite géométrie de maintien de valve (32) étant différente de la géométrie de fixation d'outil (31) .

9. Système de valve selon l'une quelconque des revendications 1 à 8, **caractérisé en ce que** la valve de régulation d'écoulement (5) est supportée dans une partie supérieure (11) du logement de valve (2) et ladite partie supérieure (11) comprend une géométrie d'accouplement d'outil (48), et la géométrie de fixation d'outil (31) et la géométrie d'accouplement d'outil (48) présentent un axe commun.

10. Système de valve selon la revendication 9, **caractérisé en ce que** la valve d'ajustement de pression (15) est supportée dans la partie supérieure (11) du logement de valve (2) et ledit moyen de fixation de valve (14) assujettit de manière amovible ladite valve d'ajustement de pression (15) à la partie supérieure (11).

11. Système d'outil (35) servant à remplacer au moins une partie d'un système de valve selon l'une quelconque des revendications 1 à 10, ledit système d'outil (35) comportant un logement d'outil, ledit logement d'outil comportant une partie de raccordement (36) pour l'assemblage dudit logement d'outil sur ledit logement de valve (2), une partie de guidage d'outil (37) et une partie de valve d'arrêt (38) disposée entre ladite partie de raccordement (36) et ladite partie de guidage d'outil (37), ladite partie de guidage d'outil (37) guidant un moyen d'actionnement (43), ledit moyen d'actionnement (43) portant un outil de siège de valve (29) et un moyen de maintien de valve (49), ledit outil de siège de valve (29) étant adapté à ladite géométrie de fixation d'outil (31), et ledit moyen de maintien de valve (49) étant conçu pour maintenir ladite valve d'ajustement de pression (15) comprenant ledit siège de valve de régulation (7) en position lors du raccordement de l'outil de siège de valve (29) avec la géométrie de fixation d'outil (31) ou de leur séparation.

12. Système d'outil selon la revendication 11, **caractérisé en ce qu'**un outil de partie supérieure est assemblé sur ledit moyen d'actionnement (43), ledit outil de partie supérieure étant adapté à ladite géométrie d'accouplement d'outil (48).

13. Système d'outil selon la revendication 12, **caractérisé en ce que** ledit outil de siège de valve (29) est assemblé sur ledit outil de partie supérieure.

14. Système d'outil selon la revendication 12 ou 13, **caractérisé en ce que** ledit outil de partie supérieure forme un cylindre creux et l'outil de siège de valve (29) peut être inséré dans ledit cylindre creux.
